# EUROPEAN PATENT APPLICATION

(11) **EP 3 343 021 A1**
(43) Date of publication of application: **04.07.2018**
(21) Application number: 16207406.6
(22) Date of filing: 29.12.2016
(51) Int. Cl.: F03B 13/14, F03B 13/20

(54) **VARIABLE VOLUME HULL FOR WAVE ENERGY CONVERTERS**

(71) Applicant: Quoceant Ltd, Edinburgh, Lothian EH6 5NP (GB)
(72) Inventor: GIBSON, Carn, Duddingston Village Edinburgh EH15 3QA (GB); DICKENS, Elizabeth, Edinburgh EH5 3AY (GB); HENDERSON, Ross, Edinburgh EH6 8ED (GB); YEMM, Richard, Edinburgh EH15 2QF (GB)
(74) Representative: Murgitroyd & Company

(57) **Abstract**

A wave energy converter is provided, the wave energy converter having a hull volume and comprising means to vary that hull volume on command in response to wave conditions. A method of operating a wave energy converter is also provided.

## Description

### Field of the Invention

The present invention relates to floating structures for use in marine environments, and in particular wave energy converters. More specifically, the present invention is a variable volume hull for use with such wave energy converters.

### Background of the Invention

Floating marine structures such as, for example, wave energy converters (WECs) must be both robustly survivable and produce sufficient average yield to deliver attractive economic performance. Many different wave energy converter concepts, forms and engineering solutions have been proposed to deliver against these two commonly conflicting requirements, but it remains a major barrier to improved cost of energy.

Wave energy converters generally use their volume to displace water as they move in response to waves, thereby absorbing power. It follows that the amount of power that can be absorbed from an ocean is strongly related to the size and volume of the system, the greater the volume the greater the absorption potential. A major issue is that the extreme loads and motions experienced in storms are also strongly related to machine size and volume, the greater the volume the higher the loads and or motions in extreme conditions. This means that fixed volume wave energy converters must inherently be a compromise between these two competing design requirements which also compromises the economics of the system. In addition to the pure size and volume of the system, to maximise absorption of power many wave energy converters have a tuned hydrodynamic response so that the incoming waves excite the wave energy converter at its resonant frequency. While this behaviour can markedly increases absorption from small seas, having a system which is inherently tuned to incoming waves is extremely dangerous in larger storm conditions.

There have been many different configurations of WEC proposed and/or developed. The majority of these have had a rigid, fixed volume hull or hulls, the motion of which in the presence of waves is restrained to absorb power. Some proposals have been included to allow the level of flotation of the hull itself to be changed or the system to be sunk below the waves to reduce loading in extreme conditions, but such systems have proposed filling and emptying trimming tanks within the hull structure.

A number of other wave energy converters have been proposed and/or developed that use volume change as a primary means of absorbing power from the wave. Inflatable or movable volumes are mounted on a stable fixed or floating reference hull. Passing waves cause the inflatable or movable volumes themselves to grow or shrink to displace water and absorb power rather than the vertical or horizontal motion of the hull itself. However, such systems are passive with the volumes varying in response to wave motion rather than including means to proactively manage the inflation and deflation process on command in a controlled way, and stow the delated structure in a conformal and protected way.

None of the previous proposals provide a wave energy converter with a hull volume that is proactively adjusted in response to prevailing or predicted wave conditions in order to obtain an optimal state for maximising absorption of wave energy and/or survivability in extreme weather/sea conditions.

It is an aim of the present invention to obviate or mitigate one or more disadvantages with existing wave energy converters of this type.

### Summary of the Invention

According to a first aspect of the present invention there is provided a wave energy converter having a hull volume and comprising means to vary that hull volume on command in response to wave conditions.

By "on command" it is meant that the varying of the hull volume is a proactive control step taken in response to the prevailing or predicted wave conditions, as opposed to known passive arrangements in which the hull volume is varied by the action of the waves alone.

The wave energy converter may further comprise a rigid, load-bearing core and wherein the means to vary the hull volume comprises at least one inflatable structure attached to the core. The at least one inflatable structure may comprise a plurality of inflatable sections arranged annularly about the core. Each inflatable section may be connected to an adjacent inflatable section by a web portion, the web portion including at least one elastic member which biases the inflatable section towards a stowed state.

The inflatable sections may be sandwiched between an inner layer and an outer layer and the at least one inflatable structure further comprises a plurality of external elastic tendons which are attached to opposing ends of the inflatable structure and pull on the outer layer tangentially relative to the inner layer, whereby the internal elastic members and external elastic tendons bias the inflatable sections towards a stowed state. Each inflatable section may be inflated individually.

The rigid core may comprise a pair of tubes with a web portion extending between the tubes, the tubes and web defining a concave shape into which the deflated inflatable structures can be stowed. Alternatively, the rigid core may comprise a trefoil frame arrangement including three longitudinal structures connected to one another by truss members, and wherein the inflatable structures can be stowed between respective pairs of the longitudinal structures.

In a further alternative, the wave energy converter may comprise a pair of inflatable structures and may further comprise:
a respective pair of covers, where each cover at least partially covers a respective inflatable structure and has a first end connected to the respective inflatable structure and a second end pivotably connected to the core; and
an elastic member connected between the pair of inflatable structures to bias the inflatable structures towards a stowed position.

The at least one inflatable structure may comprise:
an inner layer lying against an outer surface of the core; and
at least one outer layer connected to the inner layer by a plurality of threads in V-shaped arrangements.

According to a second aspect of the invention there is provided a method of operating a wave energy converter having a hull volume, the method comprising the step of varying the hull volume on command in response to wave conditions.

The step of varying the hull volume may comprise inflating or deflating at least one inflatable structure attached to a rigid core.

The method may further comprise the step of automatically stowing the at least one inflatable structure on command in response to wave conditions.

The at least one inflatable structure may comprise a plurality of inflatable sections arranged annularly about the core, and wherein the step of inflating the at least one inflatable structure comprising inflating each inflatable section individually.

The inflatable sections may be inflated with water and/or gas.

### Brief Description of the Drawings

Preferred embodiments of the present invention will now be described, by way of example only, with reference to the following drawings:
Figure 1 is a perspective view of a first embodiment of a wave energy converter (WEC) with a variable volume hull;
Figure 2 is a perspective view of an inflatable section which forms part of the WEC of figure 1;
Figures 3(a) and 3(b) show perspective and end views, respectively, of the WEC of figure 1 when in a fully inflated state;
Figures 4(a) and 4(b) show perspective and end views, respectively, of the WEC of figure 1 when in a 50% inflated state;
Figures 5(a) and 5(b) show perspective and end views, respectively, of the WEC of figure 1 when in a stowed state;
Figures 6(a) and 6(b) show end views of a second embodiment of a WEC when in inflated and stowed states, respectively;
Figures 7(a) and 7(b) show end views of a third embodiment of a WEC when in inflated and stowed states, respectively;
Figure 8 shows an end view of a fourth embodiment of a WEC; and
Figure 9 shows an end view of an inflatable structure which may form part of the present invention.

### Detailed Description of the Drawings

Preferred embodiments of the present invention will now be described in detail, where the present invention preferably comprises inflatable sections, membranes or other flexible structures to cost-effectively provide a variable hull volume around a substantially rigid, load-bearing core.

The basic concept is to use inflatable and/or extendable sections or structures to provide substantial additional volume and/or improved dynamic response to a rigid bodied wave energy converter (WEC) in small seas to increase power absorption. Those inflatable sections are deflatable and stowable on command to remove the additional volume and/or detune the dynamic response to minimise loads and motions in large seas. In non-WEC applications the arrangement can change the volume of floating marine structures or systems.

The present invention has a number of key characteristics. Firstly, the significant volume increase arising from the inflated sections is a substantial proportion of the volume of the rigid core. Preferably, at maximum inflation the inflatable sections have a total volume which is substantially equal to the volume of the core, thereby doubling the maximum available volume of the system. In a WEC this gives the potential to commensurately increase yield in normal seas without proportionate increases in peak loads or motions and therefore costs. Secondly, the inflatable sections are preferably automatically stowable on command in a time-frame corresponding to changes in wave conditions and associated forecasts. These commands may be generated in response to prevailing weather and/or wave conditions, or else they may alternatively be generated in response to weather and/or wave conditions which are predicted to arrive at some time in the future. Preferably, the inflatable sections may be stowed completely in a timeframe ranging from tens of minutes to a few hours maximum. Thirdly, the system has a stowed configuration which is robust to extreme conditions without damage or risk to the WEC. Thus, there is no loose or flapping material when the inflatable sections are stowed.

In addition, the inflatable sections are stowable with an extremely high level of reliability to avoid compromising the survivability of the WEC in extreme conditions. This is provided with redundancy in the deflation system and modularity of the inflatable sections themselves. The inflatable sections are also robust to contact with vessels, lines, quayside and general wear and tear. The system is readily maintainable, installable, and replicable with minimal quayside equipment. This is achieved with multiple manageably sized units, also serving the requirement above. There are no, or at least minimal, fastenings below the waterline to help in this regard.

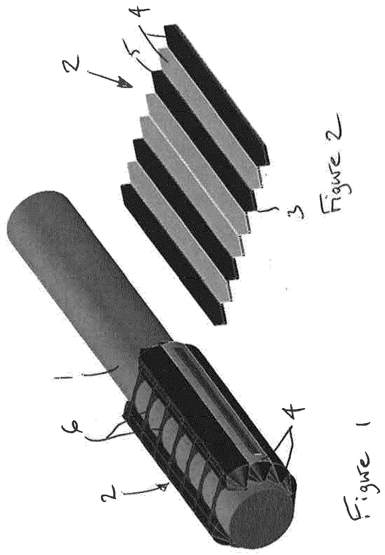

A first embodiment of a WEC is shown in detail in Figures 1-5. This first embodiment comprises a modular inflatable annular tube structure, with concertinaed internal membranes to divide the tube into axially aligned compartments to provide stability, and to allow neat and passive folding into the stowed configuration. Referring initially to figures 1 and 2 in particular these show the inflatable structure in use and before or after use, respectively. The inflatable structure, generally designated 2, comprises a plurality of axially-aligned compartments or sections 4 which may be attached to a substantially rigid core 1 in an annular arrangement. The ends 3,5 of each inflatable section 4 are generally triangular in shape and are provided with a number of fold lines so that each end folds into a substantially flat position (as shown in figure 2) when deflated. The inflatable sections are fluidly connected to an inflation system of a known type which is housed inside the core 1. Also housed in the core is a microcontroller which is in communication with a plurality of control valves in order to control the inflation and deflation of the inflatable sections. The sections 4 can be inflated with water (preferably seawater), gas (preferably air), or a mixture of the two. The controller also receives signals from an external source as regards the prevailing and predicted weather conditions at the location of the WEC. That source may be located on the WEC itself or is more preferably located at a weather station or control centre remote from the WEC.

The triangular arrangement of the section ends provides rigidity against buoyancy induced shearing or shape change of the inflatable structure 2. Individual sections 4 may be porous and filled with water, with inflation by gas of other sections providing the expansion and structural rigidity as required whilst achieving the required ballast level. The first embodiment has a hull comprising the core 1 and the inflatable structure 2. The core 1 is substantially cylindrical with the annular inflatable structure 2 mounted around the exterior of the core 1. The inflatable sections 4 do not form a complete ring about the core 1, but instead the structure 2 is split at the top, with a number of external elastic members 6 attaching the two ends of the structure 2 across the top of the core 1. It is important to note that present invention is not limited to this particular shape of core and inflatable structure, and that any form and shape of core and inflatable structure can be used instead.

The inflatable sections 4 may be separate from one another with internal fabric elements to control their shape when inflated, deflated and at any state intermediate these two extremes. In other words, each section 4 may be inflated individually or they may be linked. This separation, or compartmentalisation, of the sections 4 means that rigidity in the inflated configuration is substantially greater than for a single non-compartmentalised inflating volume. In addition, compartmentalisation allows water to be taken on in some sections such that compensation with internal pumping of ballast water may not even be necessary with associated cost savings. It is anticipated that the system would also be compartmentalised along the length of a cylindrical hull to create redundancy in service and reduce cost of repair in the event of damage.

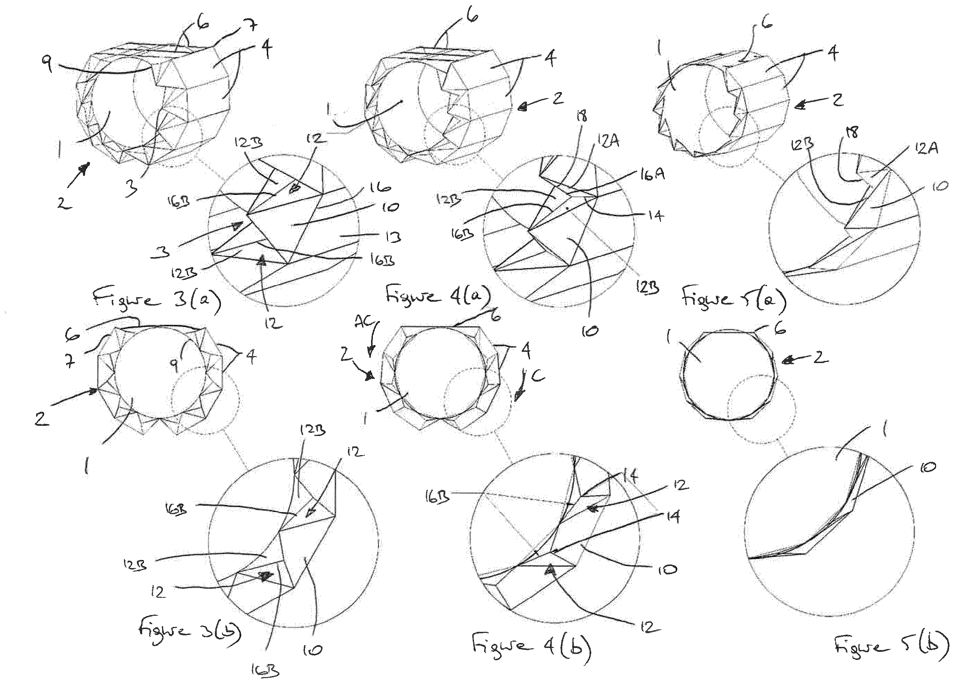

Figures 3(a) and 3(b) show perspective and end views of the system when the inflatable structure 2, and sections 4, are at maximum inflation. The detail views in particular show the arrangement of the triangular ends 3,5 of each inflatable section 4. Although only a first end 3 is shown in the figures, it should be understood that the same arrangement applies at either end 3,5. It can be seen that each first end 3 comprises an outer panel 10, which when the section 4 is fully inflated has a generally triangular shape and faces in a generally radial direction from the core 1. The outer panel 10 is attached to the longitudinal section 13 of its respective inflatable section 4 via a fold line 16 such that it may fold relative to the longitudinal section 13. Each outer panel 10 is connected to the adjoining outer panel(s) of the adjacent inflatable sections 4 by a web portion 12. Each web portion 12 is divided into first and second web portions 12A,12B by a transverse fold line 14. Each of the first and second web portions 12A,12B is also divided in two by a respective fold line 16A,16B. Each of the first web portions 12A also includes an elastic tendon or member 18 which biases the web portions 12A,12B towards a stowed, flat state shown in Figure 5. The fold lines 16A,16B are arranged so that during deflation the first web portion 12A folds outwardly and the second web portion 12B folds inwardly, as seen best in Figures 4 and 5.

Figures 4(a) and 4(b) show perspective and end views of the system when the inflatable sections 4 are 50% inflated. As can be seen in the detail views the transverse fold lines 14 on each of the web portions 12 allow the web portions 12 to fold in half, thereby allowing each end 3,5 of the inflatable sections 4 to collapse in a generally clockwise direction C (when viewed in Figure 4(b)) when the sections 4 are deflating, and to expand in a generally anti-clockwise direction AC when inflating. Figures 5(a) and 5(b) show perspective and end views of the system when the inflatable sections are completed deflated and in a stowed position. Again, the detail views show how the transverse fold lines 14 of the web portions 12, and the respective outward and inward folding actions of the first and second web portions 12A, 12B allow the ends 3,5 of each section to reach a substantially flat deflated state under the action of the elastic tendons 18. This arrangement means that the shape and stability of the inflatable structure 2 and sections 4 are well controlled and behaved at all states of inflation.

Referring to figure 3 in particular, the outer elastic members 6 pull an outer cylindrical material layer 7 of the inflatable structure tangentially relative to an inner layer 9. Along with the internal elastic tendons 18, the combined biasing actions of these internal and external elastic elements provides a folding action to progressively collapse the inflatable sections at equilibrium pressure into a neat overlap secured underneath the outer material layer 7, passively stowing the complete structure 2. The ends 3,5 of the inflatable sections 4 may fold flat in concert with the wider structure 2 by shaping them as tetrahedrons that continue the wider folding pattern to a rounded point. This point presents an unavoidable double-angle fold but this is accommodated with some appropriate material reinforcement and bend limiting in that area, given that the number of folding cycles is limited. A separate elasticated outer wear sheath (not shown) may be included over the entire structure, and rubber fender strips (not shown) may be included as familiar on rigid inflatable boats and other applications.

Splitting the annular structure 2 at the top allows the outer layer 7 to shear relative to the inner layer 9 and hence lay smooth and flat over the folded inflated sections 4 when in the stowed configuration. As a further advantage, splitting the structure 2 at the top allows it to lay flat for initial manufacture and servicing, as seen in figure 2. For installation and servicing, the whole deflated membrane structure would be pulled around the underside of the machine rigid tube with messenger lines and then attached above the water line once in position.

The annular form of the inflatable structure 2 gives well distributed bulk buoyancy loading of the rigid core 1, without concentrated load points or edges as the whole inflatable structure is essentially fitted on to the core like a swimmer's arm band. Relative rotation can be made fast above the waterline, along with the tangential external elastic members 6.

The inflatable sections 4 may be non-cylindrical, as may the rigid core, with adaptations in the design. However, retention of a simple round core tube structure is preferred as a well understood and structurally efficient form.

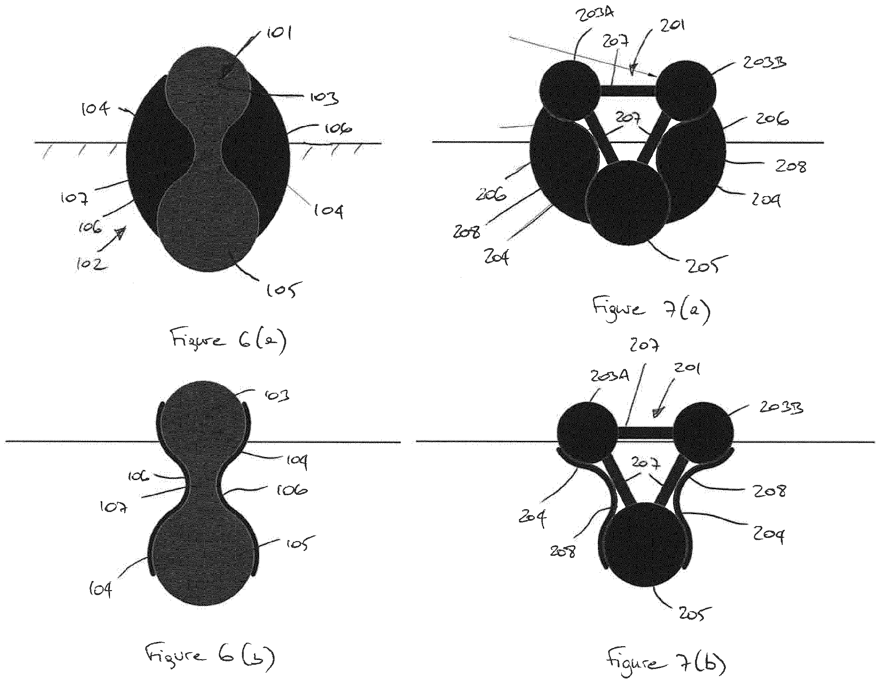

A second embodiment of the present invention is shown in figures 6(a) and 6(b), which respectively show the hull in inflated and deflated states. In this embodiment, a central, substantially rigid hull core 101 is provided with a secondary inflatable hull structure 102 in the form of a pair of single chamber inflatable sections or membranes 104 on either side thereof. The core 101 comprises upper and lower longitudinal sections 103,105 which are interconnected by a core web portion 107, giving the core 101 a concave outer profile when viewed end on as in figure 6. The longitudinal sections 103,105 and web 107 may be integrally formed so as to define a single, fixed internal volume for the core 101. As seen in figure 6(a), the inflatable sections 104 can inflate to a maximum volume in which the external surface 106 of each section 104 has a convex shape. Upon deflation, as shown in figure 6(b), the inflatable sections 104 will deflate such that the outer surfaces 106 thereof will assume the same concave shape as the outer surface of the core 101, thus stowing the sections 104 without the need for folding.

A third embodiment which is similar in operating principle to that of the second embodiment is shown in Figures 7(a) and 7(b), again in inflated and deflated states, respectively. In this third embodiment the rigid core 201 comprises a pair of upper longitudinal sections 203A,203B and a lower longitudinal section 205. Each of the sections 203A,203B,205 are connected to one another by truss members 207 such that the core has a trefoil, or triangular frame arrangement. Each of the sections 203A,203B,205 has a fixed volume which combine to define the total fixed volume of the core 201.

Attached to either side of the core frame are a pair of inflatable sections 204, which again each have an outer surface 206 which takes on a convex shape when fully inflated. An inner surface 208 of each inflatable section 204 lies in the space between each upper section 203A,203B and the lower section 205 and has a concave shape. As shown in Figure 7(b) when the inflatable sections 204 are fully deflated they take on the same concave shape as the inner surface 208.

The second and third embodiments provide flexibility in the shape and construction of the hull structure to provide an optimal balance of load carrying capacity against material requirements, while also offering the potential for further reduced core volume for improved survivability characteristics and hence reduced structural and bearing system requirements in extreme conditions. As an example, separating the volume (wave radiation) function from the load carrying function means that a deep space-frame arrangement of the kind used in the third embodiment shown in figure 7 may more cost effectively transmit the necessary bending moments (as they do in crane and bridge structures where volume is not a requirement). Such a truss need only displace sufficient volume to remain floating when the inflatable volume is stowed. This might also allow for a lower centre of gravity and associated roll stiffness and much lower volume and hydrodynamic loading in the deflated condition giving much improved survivability in storms.

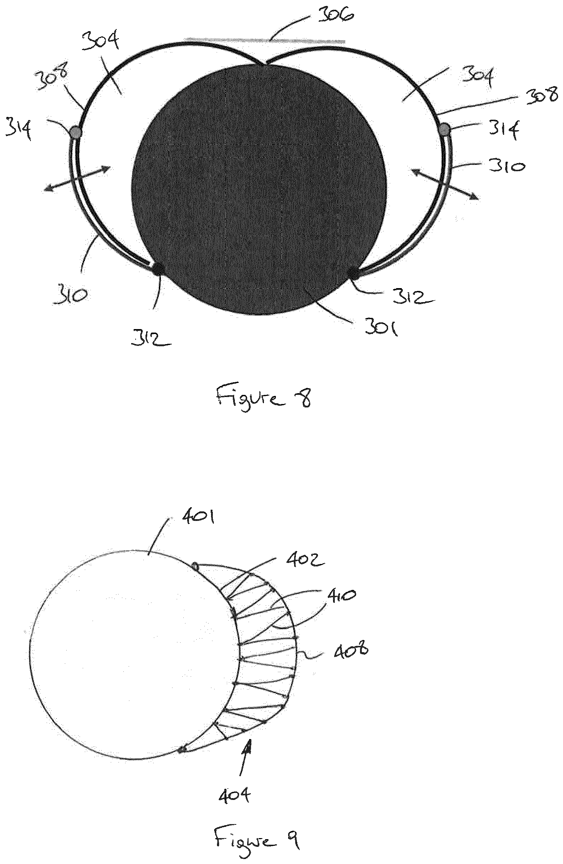

The transition of the inflatable sections 104,204 between inflated and deflated states could be problematic with a loose membrane subject to flapping and movement of air pockets when not fully pressurised. This may be controlled through segmentation/compartmentalisation along their length and indeed within the membrane compartment to form a hybrid between these latter two and the first embodiment. Alternatively the inflatable sections 104,204 could be stabilised and controlled in all states using an arrangement for the sections as shown in Figure 9, which will be described in more detail below.

A fourth embodiment of the present invention is shown in figure 8. This fourth embodiment employs a pair of inflatable sections 304 either side of a longitudinal core 301 in a similar manner to the second and third embodiments. In addition, each inflatable section is at least partially covered by a articulated cover or housing 310 having a first end 312 hinged to a lower portion of the core 301, and a second end 314 connected to an outer surface 308 of its respective inflatable section 304. In this embodiment the inflatable sections 304 may take the form of a sealed, bellows-style gusset. The covers 310 are preferably curved to lie substantially flush against the outside of the core 301 when the inflatable sections 304 are completely deflated. The covers 310 are linked to the core 301 by the inflatable sections 304 such they are held away from the core 301 in an inflated, high volume position and sucked flat against the core 301 when the inflatable gusset sections 304 are deflated. One or more external elastic members 306 may be attached to the top of each of the inflatable sections 304 in order to bias the sections towards a deflated position and hence control the flexible fabric of the sections 304 when transitioning between the inflated and deflated states.

The inflatable sections used in the present invention may be formed from relatively thin fabric membranes or sheets. Alternatively, or in addition, those inflatable sections may be formed using the arrangement shown in figure 9. Figure 9 illustrates a construction for the inflatable sections 404 which uses what is known as a "V-drop stitch core". This construction has been devised for use primarily in inflatable boards for use in stand-up paddling activities but it has been recognised by the applicant that such a construction may also be beneficial in the present invention. An inflatable section formed using this construction and a substantially rigid core 401 to which it would be attached as shown in figure 9. It should be understood that in practice there would be at least one inflatable section on either side of the core 401 but only one is shown here for illustrative purposes.

The inflatable section 404 comprises an internal layer 402 which in use lies upon the external surface of the core 401. The inflatable section 404 also has an external layer 408 which may be comprised of a single material layer, but is most preferably comprised of an inner cloth layer and at least one external hardwearing outer layer on the outer surface of the cloth layer. Within the chamber of the inflatable section are numerous nylon threads 410 which extend between the inner and outer layers 402,404 in a generally V-shaped pattern.

The invention described here uses systems to give a wave energy converter the ability to substantially and cost effectively change its volume on command in response to the prevailing wave conditions it is operating in at the time to provide a much better balance between performance and survivability.

In addition, the invention proposed here uses volume change means to directly vary a WEC hull volume with the slowly changing hour by hour prevailing wave conditions, to deliver substantially more power in small seas and substantially lower loads and motions in storm conditions increasing the economic attractiveness of the wave energy converter concept.

The extendable/stowable volume system described here also offers the ability to significantly change the dynamic response of the system to remove unwanted resonances in the stowed condition when the waves are large. Further to this, partial inflation/extension of the system also offers the ability to tune the system to different resonant frequencies to match incoming waves to further enhance economics.

The present invention is designed to break the fundamental conflicts and compromises that a fixed volume wave energy converter has between performance and survivability by introducing means to substantially change the wave energy converter hull volume on command in response to the prevailing wave conditions at the time. In the same way that sailing ships reef to deliver both speed and survivability, this would allow a wave energy converter to grow substantially and tune its response to absorb much more power during most of the year when waves are small or moderate, while reverting to a smaller robustly survivable form when the wave conditions are extreme. The volume change technology proposed here will thereby provide the economics of an otherwise non-survivable machine with the survivability of an otherwise uneconomic machine.

The benefits of the invention apply across all types of wave energy apparatus, and not only provides a major reduction in the starting cost of many such apparatus but also in the long term floor cost when the technology is mature, markedly improving the attractiveness of wave energy as a competitive energy source.

Modifications and improvements may be incorporated without departing from the scope of the invention as defined by the appended claims.

## Claims

1. A wave energy converter having a hull volume and comprising means to vary that hull volume on command in response to wave conditions.

2. The wave energy converter of claim 1 further comprising a rigid, load-bearing core and wherein the means to vary the hull volume comprises at least one inflatable structure attached to the core.

3. The wave energy converter of claim 2, wherein the at least one inflatable structure comprises a plurality of inflatable sections arranged annularly about the core.

4. The wave energy converter of claim 3, wherein each inflatable section is connected to an adjacent inflatable section by a web portion, the web portion including at least one elastic member which biases the inflatable section towards a stowed state.

5. The wave energy converter of claim 4, wherein the inflatable sections are sandwiched between an inner layer and an outer layer and the at least one inflatable structure further comprises a plurality of external elastic tendons which are attached to opposing ends of the inflatable structure and pull on the outer layer tangentially relative to the inner layer, whereby the internal elastic members and external elastic tendons bias the inflatable sections towards a stowed state.

6. The wave energy converter of any of claims 3 to 5, wherein each inflatable section is inflated individually.

7. The wave energy converter of claim 2, wherein the rigid core comprises a pair of tubes with a web portion extending between the tubes, the tubes and web defining a concave shape into which the deflated inflatable structures can be stowed.

8. The wave energy converter of claim 2, wherein the rigid core comprises a trefoil frame arrangement including three longitudinal structures connected to one another by truss members, and wherein the inflatable structures can be stowed between respective pairs of the longitudinal structures.

9. The wave energy converter of any of claim 2, comprising a pair of inflatable structures and further comprising:
a respective pair of covers, where each cover at least partially covers a respective inflatable structure and has a first end connected to the respective inflatable structure and a second end pivotably connected to the core; and
an elastic member connected between the pair of inflatable structures to bias the inflatable structures towards a stowed position.

10. The wave energy converter of any of claims 2 to 9, wherein the at least one inflatable structure comprises:
an inner layer lying against an outer surface of the core; and
at least one outer layer connected to the inner layer by a plurality of threads in V-shaped arrangements.

11. A method of operating a wave energy converter having a hull volume, the method comprising the step of varying the hull volume on command in response to wave conditions.

12. The method of claim 11, wherein the step of varying the hull volume comprises inflating or deflating at least one inflatable structure attached to a rigid core.

13. The method of claim 12, further comprising the step of automatically stowing the at least one inflatable structure on command in response to wave conditions.

14. The method of claim 12 or claim 13, wherein the at least one inflatable structure comprises a plurality of inflatable sections arranged annularly about the core, and wherein the step of inflating the at least one inflatable structure comprising inflating each inflatable section individually.

15. The method of claim 14, wherein the inflatable sections are inflated with water and/or gas.
